# EUROPÄISCHE PATENTANMELDUNG

(11) **EP 2 017 937 A1**
(43) Veröffentlichungstag der Anmeldung: **21.01.2009**
(21) Anmeldenummer: 07112846.6
(22) Anmeldetag: 20.07.2007
(51) Int. Cl.: H02J 3/32

(54) **Batteriespeichersystem und Verfahren zum Betrieb eines solchen Batteriespeichersystems**

(71) Anmelder: ABB Research Ltd., 8050 Zürich (CH)
(72) Erfinder: Ohler, Christian, CH-5400 Baden (CH); Bühler, Tilo, CH-5430 Wettingen (CH); Chartouni, Daniel, CH-5400 Baden (CH)
(74) Vertreter: ABB Patent Attorneys

(57) **Zusammenfassung**

Es wird eine Batteriespeichersystem und ein Verfahren zum Betrieb eines Batteriespeichersystems angegeben, welches Batteriespeichersystem einen Umrichter (1) für Gleich- und Wechselrichterbetrieb zur Ankopplung an ein elektrisches Wechselspannungsnetz aufweist. Zu Vermeidung einer tiefen Entladung sowie eines schnell wechselnden Lade-Entlade-Zyklusses ist eine erste und eine zweite Gleichstromstellereinheit (2, 3) vorgesehen, wobei jede Gleichstromstellereinheit (2, 3) einen bidirektionalen Gleichstromsteller (5, 6) und eine mit dem jeweiligen Eingang des zugehörigen bidirektionalen Gleichstromstellers (5, 6) verbundene Batterie (8, 9) aufweist und die Ausgänge der bidirektionalen Gleichstromsteller (5, 6) mit der Gleichspannungsseite des Umrichters (1) und parallel miteinander verbunden sind. Bei Erreichen des ersten Grenzwertes (LZ1) des Ladezustandes der Batterie (8) der ersten Gleichstromstellereinheit (2) bis zum Erreichen des zweiten Grenzwertes (LZ2) des Ladezustandes der Batterie (8) der ersten Gleichstromstellereinheit (2) oder bei Erreichen des zweiten Grenzwertes (LZ2) des Ladezustandes der Batterie (9) der zweiten Gleichstromstellereinheit (3) bis zum Erreichen des ersten Grenzwertes (LZ1) des Ladezustandes der Batterie (9) der zweiten Gleichstromstellereinheit (3) und bei Erreichen des ersten Schwellwertes (f1) wird elektrische Energie aus der Batterie (8) der ersten Gleichstromstellereinheit (2) über den bidirektionalen Gleichstromsteller (5) der ersten Gleichstromstellereinheit (2) und den Umrichter (1) in das elektrische Wechselspannungsnetz eingespeist. Ferner wird bei Erreichen des ersten Grenzwertes (LZ1) des Ladezustandes der Batterie (8) der ersten Gleichstromstellereinheit (2) bis zum Erreichen des zweiten Grenzwertes (LZ2) des Ladezustandes der Batterie (8) der ersten Gleichstromstellereinheit (2) oder bei Erreichen des zweiten Grenzwertes (LZ2) des Ladezustandes der Batterie (9) der zweiten Gleichstromstellereinheit (3) bis zum Erreichen des ersten Grenzwertes (LZ1) des Ladezustandes der Batterie (9) der zweiten Gleichstromstellereinheit (3) und bei Erreichen des zweiten Schwellwertes (f2) elektrische Energie aus dem elektrischen Wechselspannungsnetz über den Umrichter (1) und den bidirektionalen Gleichstromsteller (6) der zweiten Gleichstromstellereinheit (3) in die Batterie (9) der zweiten Gleichstromstellereinheit (3) eingespeist.

## Beschreibung

### Technisches Gebiet

Die Erfindung bezieht sich auf das Gebiet der elektrischen Speichersysteme. Sie geht aus von einem Batteriespeichersystem und einem Verfahren zum Betrieb eines solchen Batteriespeichersystems gemäss den Oberbegriffen der unabhängigen Ansprüche.

### Stand der Technik

Batteriespeichersysteme werden heute in einer Vielzahl von Anwendungen eingesetzt. Eine Anwendung ist die Frequenzregelung eines elektrischen Wechselspannungsversorgungsnetzes. Typischerweise weist ein Batteriespeichersystem für diese Anwendung eine einzige Batterie, einen mit der Batterie verbundenen bidirektionalen Gleichstromsteller und einen mit dem Gleichstromsteller verbundenen bidirektionalen Umrichter, d.h. für Gleich- und Wechselrichterbetrieb, zur Ankopplung an das elektrische Wechselspannungsnetz. Fällt beispielsweise die Frequenz des elektrischen Wechselspannungsnetzes unter einen ersten Schwellwert ab, so wird die Batterie über den Gleichstromsteller und den Umrichter in das elektrische Wechselspannungsnetz entladen, um elektrische Energie in das elektrische Wechselspannungsnetz einzuspeisen und damit eine Stabilisierung der Frequenz oberhalb des ersten Schwellwertes zu erreichen. Steigt hingegen die Frequenz des elektrischen Wechselspannungsnetzes über einen zweiten Schwellwert an, so wird die Batterie über den Umrichter und den Gleichstromsteller aus dem elektrische Wechselspannungsnetz geladen, um elektrische Energie aus dem elektrischen Wechselspannungsnetz zu beziehen und damit eine Stabilisierung der Frequenz unterhalb des zweiten Schwellwertes zu erreichen.

Problematisch bei einem vorstehend beschriebenen Batteriespeichersystem nach dem Stand der Technik ist, dass vor allem durch tiefes Entladen der Batterie und durch einen sehr oft und schnell wechselnden Lade-Entlade-Zyklus bei der Frequenzregelung des elektrischen Wechselspannungsnetzes die Batteriekapazität und die Lebensdauer der Batterie selbst stark abnimmt.

### Darstellung der Erfindung

Aufgabe der Erfindung ist es deshalb, ein Batteriespeichersystem sowie ein Verfahren zum Betrieb eines solchen Batteriespeichersystems anzugeben, welches es ermöglicht, ein tiefes Entladen sowie einen schnell wechselnden Lade-Entlade-Zyklus weitestgehend zu vermeiden. Diese Aufgabe wird durch die Merkmale des Anspruchs 1 und des Anspruchs 2 gelöst. In den abhängigen Ansprüchen sind vorteilhafte Weiterbildungen der Erfindung angegeben.

Das erfindungsgemässe Batteriespeichersystem umfasst einen bidirektionalen Umrichter, d.h. für Gleich- und Wechselrichterbetrieb, zur Ankopplung an ein elektrisches Wechselspannungsnetz. Erfindungsgemäss ist weiterhin eine erste und eine zweite Gleichstromstellereinheit vorgesehen, wobei jede Gleichstromstellereinheit einen bidirektionalen Gleichstromsteller und eine mit dem jeweiligen Eingang des zugehörigen bidirektionalen Gleichstromstellers verbundene Batterie aufweist. Die Ausgänge der bidirektionalen Gleichstromsteller sind mit der Gleichspannungsseite des Umrichters verbunden und die Ausgänge der bidirektionalen Gleichstromsteller sind parallel miteinander verbunden. Das erfindungsgemässe Batteriespeichersystem ist somit denkbar einfach aufgebaut, deshalb schnell zu realisieren, robust und wartungsfreundlich. In Verbindung mit dem erfindungsgemässen Verfahren zum Betrieb des Batteriespeichersystems lässt sich vorteilhaft ein tiefes Entladen sowie ein schnell wechselnder Lade-Entlade-Zyklus nahezu vermeiden.

Beim erfindungsgemässen Verfahren zum Betrieb des Batteriespeichersystems wird die Frequenz fn des elektrischen Wechselspannungsnetzes überwacht, und zwar auf einen ersten Schwellwert und auf einen zweiten Schwellwert hin, wobei der zweite Schwellwert grösser als der erste Schwellwert ist. Weiterhin wird der Ladezustand der Batterie der ersten Gleichstromstellereinheit und der Ladezustand der Batterie der zweiten Gleichstromstellereinheit auf einen ersten Grenzwert und auf einen zweiten Grenzwert hin überwacht, wobei der erste Grenzwert grösser als der zweite Grenzwert ist. Bei Erreichen des ersten Grenzwertes des Ladezustandes der Batterie der ersten Gleichstromstellereinheit bis zum Erreichen des zweiten Grenzwertes des Ladezustandes der Batterie der ersten Gleichstromstellereinheit oder bei Erreichen des zweiten Grenzwertes des Ladezustandes der Batterie der zweiten Gleichstromstellereinheit bis zum Erreichen des ersten Grenzwertes des Ladezustandes der Batterie der zweiten Gleichstromstellereinheit und bei Erreichen des ersten Schwellwertes wird elektrische Energie aus der Batterie der ersten Gleichstromstellereinheit über den bidirektionalen Gleichstromsteller der ersten Gleichstromstellereinheit und den Umrichter in das elektrische Wechselspannungsnetz eingespeist. Ferner wird bei Erreichen des ersten Grenzwertes des Ladezustandes der Batterie der ersten Gleichstromstellereinheit bis zum Erreichen des zweiten Grenzwertes des Ladezustandes der Batterie der ersten Gleichstromstellereinheit oder bei Erreichen des zweiten Grenzwertes des Ladezustandes der Batterie der zweiten Gleichstromstellereinheit bis zum Erreichen des ersten Grenzwertes des Ladezustandes der Batterie der zweiten Gleichstromstellereinheit und bei Erreichen des zweiten Schwellwertes elektrische Energie aus dem elektrischen Wechselspannungsnetz über den Umrichter und den bidirektionalen Gleichstromsteller der zweiten Gleichstromstellereinheit in die Batterie der zweiten Gleichstromstellereinheit eingespeist. Vorteilhaft hat deshalb jede Gleichstromstellereinheit innerhalb der vorstehend genannten Grenzwerte lediglich eine einzige Aufgabe und es wird dadurch immer nur eine Batterie beispielsweise bei Erreichen des ersten Schwellwertes entladen, um elektrische Energie in das elektrische Wechselspannungsnetz einzuspeisen und damit eine Stabilisierung der Frequenz oberhalb des ersten Schwellwertes zu erreichen. Bei Erreichen des zweiten Schwellwertes wird dann diese Batterie nicht sofort wieder aufgeladen, sondern es wird eine Batterie der anderen Gleichstromstellereinheit geladen, um elektrische Energie aus dem elektrischen Wechselspannungsnetz zu beziehen und damit eine Stabilisierung der Frequenz unterhalb des zweiten Schwellwertes zu erreichen. Dieses Konzept der verteilten Aufgaben der Gleichstromstellereinheiten hilft mit Vorteil ein tiefes Entladen einer einzigen Batterie sowie einen schnell wechselnden Lade-Entlade-Zyklus einer einzigen Batterie nahezu zu vermeiden. Damit können starke Belastungen reduziert beziehungsweise gering gehalten werden, wodurch die Batteriekapazität länger erhalten bleibt und die Lebensdauer der Batterie verlängert werden kann.

Diese und weitere Aufgaben, Vorteile und Merkmale der vorliegenden Erfindung werden aus der nachfolgenden detaillierten Beschreibung bevorzugter Ausführungsformen der Erfindung in Verbindung mit der Zeichnung offensichtlich.

### Kurze Beschreibung der Zeichnungen

Es zeigen:
- Fig. 1: eine Ausführungsform eines erfindungsgemässen Batteriespeichersystems und
- Fig. 2: ein Diagramm der Verteilung der Schwellwerte bezüglich der Frequenz eines elektrischen Wechselspannungsnetzes.

Die in der Zeichnung verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen. Die beschriebenen Ausführungsformen stehen beispielhaft für den Erfindungsgegenstand und haben keine beschränkende Wirkung.

### Wege zur Ausführung der Erfindung

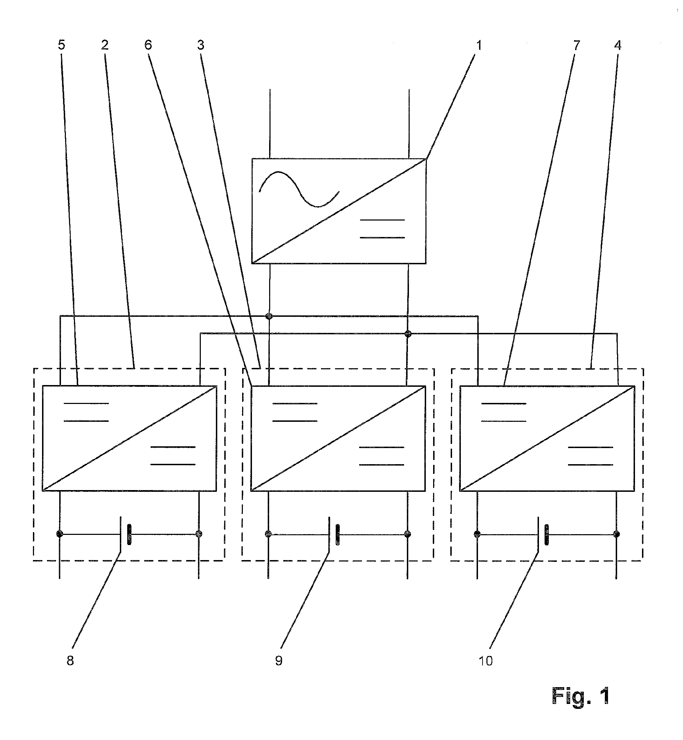

In Fig. 1 ist eine erste Ausführungsform eines erfindungsgemässen Batteriespeichersystems dargestellt. Darin weist das erfindungsgemässe Batteriespeichersystem einen bidirektionalen Umrichter 1, d.h. für Gleich- und Wechselrichterbetrieb, zur Ankopplung an ein elektrisches Wechselspannungsnetz auf. Erfindungsgemäss ist desweiteren eine erste und eine zweite Gleichstromstellereinheit 2, 3 vorgesehen, wobei jede Gleichstromstellereinheit 2, 3 einen bidirektionalen Gleichstromsteller 5, 6 und eine mit dem jeweiligen Eingang des zugehörigen bidirektionalen Gleichstromstellers 5, 6 verbundene Batterie 8, 9 aufweist. Vorzugsweise ist der jeweilige bidirektionale Gleichstromsteller 5, 6 als Zweiquadrantengleichstromsteller ausgebildet, wodurch eine äusserst einfache und wenig störanfällige Realisierung des jeweiligen bidirektionalen Gleichstromstellers 5, 6 ermöglicht ist. Die Ausgänge der bidirektionalen Gleichstromsteller 5, 6 sind mit der Gleichspannungsseite des Umrichters 1 verbunden und die Ausgänge der bidirektionalen Gleichstromsteller 5, 6 sind parallel miteinander verbunden. Das erfindungsgemässe Batteriespeichersystem ist somit denkbar einfach aufgebaut, deshalb schnell zu realisieren, robust und wartungsfreundlich.

Weiterhin ist gemäss Fig. 1 eine dritte Gleichstromstellereinheit 4 vorgesehen, wobei die dritte Gleichstromstellereinheit 4 einen bidirektionalen Gleichstromsteller 7 und eine mit dem Eingang des dritten bidirektionalen Gleichstromstellers 7 verbundene zugehörige Batterie 10 aufweist. Der Ausgang des dritten bidirektionalen Gleichstromstellers 7 ist mit der Gleichspannungsseite des Umrichters 1 verbunden, wobei die Ausgänge der bidirektionalen Gleichstromsteller 5, 6, 7 parallel miteinander verbunden sind.

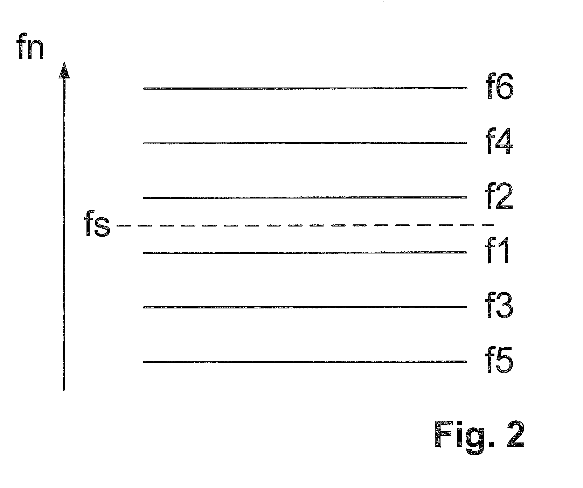

Beim erfindungsgemässen Verfahren zum Betrieb des Batteriespeichersystems wird die Frequenz fn des elektrischen Wechselspannungsnetzes überwacht, und zwar auf einen ersten Schwellwert f1 und auf einen zweiten Schwellwert f2 hin, wobei der zweite Schwellwert f2 grösser als der erste Schwellwert f1 ist. In Fig. 2 ist dazu zum besseren Verständnis ein Diagramm der Verteilung der Schwellwerte f1, f2, f3, f4, f5, f6 bezüglich der Soll-Frequenz fs des elektrischen Wechselspannungsnetzes dargestellt, wobei auf die weiteren Schwellwerte f3, f4, f5, f6 noch näher eingegangen wird. Ferner wird der Ladezustand der Batterie 8 der ersten Gleichstromstellereinheit 2 und der Ladezustand der Batterie 9 der zweiten Gleichstromstellereinheit 3 auf einen ersten Grenzwert LZ1 und auf einen zweiten Grenzwert LZ2 hin überwacht, wobei der erste Grenzwert LZ1 grösser als der zweite Grenzwert LZ2 ist. Vorzugsweise wird der erste Grenzwert LZ1 beispielsweise zu 90% bezüglich einer voll aufgeladenen Batterie (100%) und der zweite Grenzwert LZ2 beispielsweise zu 10% bezüglich einer voll aufgeladenen Batterie (100%) gewählt. Bei Erreichen des ersten Grenzwertes LZ1 des Ladezustandes der Batterie 8 der ersten Gleichstromstellereinheit 2 bis zum Erreichen des zweiten Grenzwertes LZ2 des Ladezustandes der Batterie 8 der ersten Gleichstromstellereinheit 2, d.h. die Batterie 8 der ersten Gleichstromstellereinheit 2 war beispielsweise bis LZ1=90% aufgeladen und ihr Ladezustand sinkt nun gegen LZ2=10% ab, oder bei Erreichen des zweiten Grenzwertes LZ2 des Ladezustandes der Batterie 9 der zweiten Gleichstromstellereinheit 3 bis zum Erreichen des ersten Grenzwertes LZ1 des Ladezustandes der Batterie 9 der zweiten Gleichstromstellereinheit 3 d.h. die Batterie 9 der zweiten Gleichstromstellereinheit 3 war beispielsweise bis LZ2=10% aufgeladen und ihr Ladezustand steigt nun gegen LZ1 =90% an, und bei Erreichen des ersten Schwellwertes f1 wird elektrische Energie aus der Batterie 8 der ersten Gleichstromstellereinheit 2 über den bidirektionalen Gleichstromsteller 5 der ersten Gleichstromstellereinheit 2 und den Umrichter1 in das elektrische Wechselspannungsnetz eingespeist. Dadurch wird die Frequenz fn oberhalb des ersten Schwellwertes f1 und damit nahe der Soll-Frequenz fs mit Vorteil stabilisiert. Die erste Gleichstromstellereinheit 2 hat damit bezüglich ihrer Batterie 8 eine Entladefunktion. Ferner wird bei Erreichen des ersten Grenzwertes LZ1 des Ladezustandes der Batterie 8 der ersten Gleichstromstellereinheit 2 bis zum Erreichen des zweiten Grenzwertes LZ2 des Ladezustandes der Batterie 8 der ersten Gleichstromstellereinheit 2 oder bei Erreichen des zweiten Grenzwertes LZ 2 des Ladezustandes der Batterie 9 der zweiten Gleichstromstellereinheit 3 bis zum Erreichen des ersten Grenzwertes LZ1 des Ladezustandes der Batterie 9 der zweiten Gleichstromstellereinheit 3 und bei Erreichen des zweiten Schwellwertes f2 elektrische Energie aus dem elektrischen Wechselspannungsnetz über den Umrichter 1 und den bidirektionalen Gleichstromsteller 6 der zweiten Gleichstromstellereinheit 3 in die Batterie 9 der zweiten Gleichstromstellereinheit 3 eingespeist. Dadurch wird die Frequenz fn unterhalb des zweiten Schwellwertes f2 und damit nahe der Soll-Frequenz fs mit Vorteil stabilisiert. Die zweite Gleichstromstellereinheit 3 hat damit bezüglich ihrer Batterie 9 eine Ladefunktion. Vorteilhaft hat jede Gleichstromstellereinheit 2, 3 innerhalb der vorstehend genannten Grenzwerte LZ1, LZ2 lediglich eine einzige Aufgabe beziehungsweise Funktionalität und es wird dadurch immer nur eine Batterie 8, 9 beispielsweise bei Erreichen des ersten Schwellwertes f1 entladen, um elektrische Energie in das elektrische Wechselspannungsnetz einzuspeisen und damit eine Stabilisierung der Frequenz fn oberhalb des ersten Schwellwertes f1 und damit nahe der Soll-Frequenz fs zu erreichen. Bei Erreichen des zweiten Schwellwertes f2 wird dann diese Batterie 8, 9 nicht sofort wieder aufgeladen, sondern es wird eine Batterie 8, 9 der anderen Gleichstromstellereinheit 2, 3 geladen, um elektrische Energie aus dem elektrischen Wechselspannungsnetz zu beziehen und damit eine Stabilisierung der Frequenz fn unterhalb des zweiten Schwellwertes f2 und damit nahe der Soll-Frequenz fs zu erreichen. Dieses Konzept der verteilten Aufgaben beziehungsweise Funktionalitäten der Gleichstromstellereinheiten 2, 3 hilft mit Vorteil ein tiefes Entladen einer einzigen Batterie 8, 9 sowie einen schnell wechselnden Lade-Entlade-Zyklus einer einzigen Batterie 8, 9 nahezu zu vermeiden. Damit können starke Belastungen reduziert beziehungsweise gering gehalten werden, wodurch die Batteriekapazität länger erhalten bleibt und die Lebensdauer der Batterie 8, 9 verlängert werden kann.

Vorzugsweise wird die Frequenz fn des elektrischen Wechselspannungsnetzes auf einen dritten Schwellwert f3 hin überwacht, wobei der dritte Schwellwert f3 kleiner als der erste Schwellwert f1 ist. Dieser Fall tritt dann auf, wenn die Frequenz fn des elektrischen Wechselspannungsnetzes unter den ersten Schwellwert f1 fällt und den dritten Schwellwert f3 erreicht. Bei Erreichen des ersten Grenzwertes LZ1 des Ladezustandes der Batterie 8 der ersten Gleichstromstellereinheit 2 bis zum Erreichen des zweiten Grenzwertes LZ2 des Ladezustandes der Batterie 8 der ersten Gleichstromstellereinheit 2 oder bei Erreichen des zweiten Grenzwertes LZ2 des Ladezustandes der Batterie 9 der zweiten Gleichstromstellereinheit 3 bis zum Erreichen des ersten Grenzwertes LZ1 des Ladezustandes der Batterie 9 der zweiten Gleichstromstellereinheit 3 und bei Erreichen des dritten Schwellwertes f3 wird dann zusätzlich elektrische Energie aus der Batterie 10 der dritten Gleichstromstellereinheit 4 über den bidirektionalen Gleichstromsteller 7 der dritten Gleichstromstellereinheit 4 und den Umrichter 1 in das elektrische Wechselspannungsnetz eingespeist. Dadurch wird die Frequenz fn oberhalb des dritten und ersten Schwellwertes f3, f1 und damit nahe der Soll-Frequenz fs mit Vorteil stabilisiert. Die dritte Gleichstromstellereinheit 4 hat damit bezüglich ihrer Batterie 10 eine Entladefunktion.

Weiterhin wird die Frequenz fn des elektrischen Wechselspannungsnetzes auf einen vierten Schwellwert f4 hin überwacht, wobei der vierte Schwellwert f4 grösser als der zweite Schwellwert f2 ist. Dieser Fall tritt dann auf, wenn die Frequenz fn des elektrischen Wechselspannungsnetzes über den zweiten Schwellwert f2 hinaus ansteigt und den vierten Schwellwert f4 erreicht. Bei Erreichen des ersten Grenzwertes LZ1 des Ladezustandes der Batterie 8 der ersten Gleichstromstellereinheit 2 bis zum Erreichen des zweiten Grenzwertes LZ2 des Ladezustandes der Batterie 8 der ersten Gleichstromstellereinheit 2 oder bei Erreichen des zweiten Grenzwertes LZ2 des Ladezustandes der Batterie 9 der zweiten Gleichstromstellereinheit 3 bis zum Erreichen des ersten Grenzwertes LZ1 des Ladezustandes der Batterie 9 der zweiten Gleichstromstellereinheit 3 und bei Erreichen des vierten Schwellwertes f4 wird dann zusätzlich elektrische Energie aus dem elektrischen Wechselspannungsnetz über den Umrichter 1 und den bidirektionalen Gleichstromsteller 7 der dritten Gleichstromstellereinheit 4 in die Batterie 10 der dritten Gleichstromstellereinheit 4 eingespeist. Dadurch wird die Frequenz fn unterhalb des vierten und zweiten Schwellwertes f4, f2 und damit nahe der Soll-Frequenz fs mit Vorteil stabilisiert. Die dritte Gleichstromstellereinheit 4 hat damit bezüglich ihrer Batterie 10 eine Ladefunktion.

Darüber hinaus wird die Frequenz fn des elektrischen Wechselspannungsnetzes auf einen fünften Schwellwert f5 hin überwacht, wobei der fünfte Schwellwert f5 kleiner als der dritte Schwellwert f3 ist. Dieser Fall tritt dann auf, wenn die Frequenz fn des elektrischen Wechselspannungsnetzes unter den ersten Schwellwert f1 fällt, unter den dritten Schwellwert f3 fällt und den fünften Schwellwert f5 erreicht. Bei Erreichen des ersten Grenzwertes LZ1 des Ladezustandes der Batterie 8 der ersten Gleichstromstellereinheit 2 bis zum Erreichen des zweiten Grenzwertes LZ2 des Ladezustandes der Batterie 8 der ersten Gleichstromstellereinheit 2 oder bei Erreichen des zweiten Grenzwertes LZ2 des Ladezustandes der Batterie 9 der zweiten Gleichstromstellereinheit 3 bis zum Erreichen des ersten Grenzwertes LZ1 des Ladezustandes der Batterie 9 der zweiten Gleichstromstellereinheit 3 und bei Erreichen des fünften Schwellwertes f5 wird dann zusätzlich elektrische Energie aus der Batterie 9 der zweiten Gleichstromstellereinheit 3 über den bidirektionalen Gleichstromsteller 6 der zweiten Gleichstromstellereinheit 3 und den Umrichter 1 in das elektrische Wechselspannungsnetz eingespeist. Dadurch wird die Frequenz fn oberhalb des fünften, dritten und ersten Schwellwertes f5, f3, f1 und damit nahe der Soll-Frequenz fs mit Vorteil stabilisiert. Die zweite Gleichstromstellereinheit 3 hat damit bezüglich ihrer Batterie 9 eine Entladefunktion.

Ferner wird die Frequenz fn des elektrischen Wechselspannungsnetzes auf einen sechsten Schwellwert f6 hin überwacht, wobei der sechste Schwellwert f6 grösser als der vierte Schwellwert f4 ist. Dieser Fall tritt dann auf, wenn die Frequenz fn des elektrischen Wechselspannungsnetzes über den zweiten Schwellwert f2 hinaus ansteigt, über den vierten Schwellwert f4 hinaus ansteigt und den sechsten Schwellwert f6 erreicht. Bei Erreichen des ersten Grenzwertes LZ1 des Ladezustandes der Batterie 8 der ersten Gleichstromstellereinheit 2 bis zum Erreichen des zweiten Grenzwertes LZ2 des Ladezustandes der Batterie 8 der ersten Gleichstromstellereinheit 2 oder bei Erreichen des zweiten Grenzwertes LZ2 des Ladezustandes der Batterie 9 der zweiten Gleichstromstellereinheit 3 bis zum Erreichen des ersten Grenzwertes LZ1 des Ladezustandes der Batterie 9 der zweiten Gleichstromstellereinheit 3 und bei Erreichen des sechsten Schwellwertes f6 wird dann zusätzlich elektrische Energie aus dem elektrischen Wechselspannungsnetz über den Umrichter 1 und den bidirektionalen Gleichstromsteller 5 der ersten Gleichstromstellereinheit 2 in die Batterie 8 der ersten Gleichstromstellereinheit 2 eingespeist. Dadurch wird die Frequenz fn unterhalb des sechsten, vierten und zweiten Schwellwertes f6, f4, f2 und damit nahe der Soll-Frequenz fs mit Vorteil stabilisiert. Die erste Gleichstromstellereinheit 2 hat damit bezüglich ihrer Batterie 8 eine Ladefunktion.

Im Falle des Erreichens des zweiten Grenzwertes LZ2 des Ladezustandes der Batterie 8 der ersten Gleichstromstellereinheit 2 bis zum Erreichen des ersten Grenzwertes LZ1 des Ladezustandes der Batterie 8 der ersten Gleichstromstellereinheit 2, d.h. die Batterie 8 der ersten Gleichstromstellereinheit 2 war beispielsweise bis LZ2=10% aufgeladen und ihr Ladezustand steigt nun gegen LZ1 =90% an, oder bei Erreichen des ersten Grenzwertes LZ1 des Ladezustandes der Batterie 9 der zweiten Gleichstromstellereinheit 3 bis zum Erreichen des zweiten Grenzwertes LZ2 des Ladezustandes der Batterie 9 der zweiten Gleichstromstellereinheit 3, d.h. Batterie 9 der zweiten Gleichstromstellereinheit 3 war beispielsweise bis LZ1=90% aufgeladen und ihr Ladezustand sinkt nun gegen LZ2=10% ab, und bei Erreichen des ersten Schwellwertes f1 wird elektrische Energie aus der Batterie 9 der zweiten Gleichstromstellereinheit 3 über den bidirektionalen Gleichstromsteller 6 der zweiten Gleichstromstellereinheit 3 und den Umrichter 1 in das elektrische Wechselspannungsnetz eingespeist. Dadurch wird die Frequenz fn oberhalb des ersten Schwellwertes f1 und damit nahe der Soll-Frequenz fs mit Vorteil stabilisiert. Die zweite Gleichstromstellereinheit 3 hat damit bezüglich ihrer Batterie 9 eine Entladefunktion. Desweiteren wird bei Erreichen des zweiten Grenzwertes LZ2 des Ladezustandes der Batterie 8 der ersten Gleichstromstellereinheit 2 bis zum Erreichen des ersten Grenzwertes LZ1 des Ladezustandes der Batterie 8 der ersten Gleichstromstellereinheit 2 oder bei Erreichen des ersten Grenzwertes LZ1 des Ladezustandes der Batterie 9 der zweiten Gleichstromstellereinheit 3 bis zum Erreichen des zweiten Grenzwertes LZ2 des Ladezustandes der Batterie 9 der zweiten Gleichstromstellereinheit 3 und bei Erreichen des zweiten Schwellwertes f2 elektrische Energie aus dem elektrischen Wechselspannungsnetz über den Umrichter 1 und den bidirektionalen Gleichstromsteller 5 der ersten Gleichstromstellereinheit 2 in die Batterie 8 der ersten Gleichstromstellereinheit 2 eingespeist. Dadurch wird die Frequenz fn unterhalb des zweiten Schwellwertes f2 und damit nahe der Soll-Frequenz fs mit Vorteil stabilisiert. Die erste Gleichstromstellereinheit 2 hat damit bezüglich ihrer Batterie 8 eine Ladefunktion.

Bei Erreichen des zweiten Grenzwertes LZ2 des Ladezustandes der Batterie 8 der ersten Gleichstromstellereinheit 2 bis zum Erreichen des ersten Grenzwertes LZ1 des Ladezustandes der Batterie 8 der ersten Gleichstromstellereinheit 2 oder bei Erreichen des ersten Grenzwertes LZ1 des Ladezustandes der Batterie 9 der zweiten Gleichstromstellereinheit 3 bis zum Erreichen des zweiten Grenzwertes LZ2 des Ladezustandes der Batterie 9 der zweiten Gleichstromstellereinheit 3 und bei Erreichen des dritten Schwellwertes f3 wird dann zusätzlich elektrische Energie aus der Batterie 10 der dritten Gleichstromstellereinheit 4 über den bidirektionalen Gleichstromsteller 7 der dritten Gleichstromstellereinheit 4 und den Umrichter 1 in das elektrische Wechselspannungsnetz eingespeist. Dadurch wird die Frequenz fn oberhalb des dritten und ersten Schwellwertes f3, f1 und damit nahe der Soll-Frequenz fs mit Vorteil stabilisiert. Die dritte Gleichstromstellereinheit 4 hat damit bezüglich ihrer Batterie 10 eine Entladefunktion.

Bei Erreichen des zweiten Grenzwertes LZ2 des Ladezustandes der Batterie 8 der ersten Gleichstromstellereinheit 2 bis zum Erreichen des ersten Grenzwertes LZ1 des Ladezustandes der Batterie 8 der ersten Gleichstromstellereinheit 2 oder bei Erreichen des ersten Grenzwertes LZ1 des Ladezustandes der Batterie 9 der zweiten Gleichstromstellereinheit 3 bis zum Erreichen des zweiten Grenzwertes LZ2 des Ladezustandes der Batterie 9 der zweiten Gleichstromstellereinheit 3 und bei Erreichen des vierten Schwellwertes f4 wird dann zusätzlich elektrische Energie aus dem elektrischen Wechselspannungsnetz über den Umrichter 1 und den bidirektionalen Gleichstromsteller 7 der dritten Gleichstromstellereinheit 4 in die Batterie 10 der dritten Gleichstromstellereinheit 4 eingespeist. Dadurch wird die Frequenz fn unterhalb des vierten und zweiten Schwellwertes f4, f2 und damit nahe der Soll-Frequenz fs mit Vorteil stabilisiert. Die dritte Gleichstromstellereinheit 4 hat damit bezüglich ihrer Batterie 10 eine Ladefunktion.

Bei Erreichen des zweiten Grenzwertes LZ2 des Ladezustandes der Batterie 8 der ersten Gleichstromstellereinheit 2 bis zum Erreichen des ersten Grenzwertes LZ1 des Ladezustandes der Batterie 8 der ersten Gleichstromstellereinheit 2 oder bei Erreichen des ersten Grenzwertes LZ1 des Ladezustandes der Batterie 9 der zweiten Gleichstromstellereinheit 3 bis zum Erreichen des zweiten Grenzwertes LZ2 des Ladezustandes der Batterie 9 der zweiten Gleichstromstellereinheit 3 und bei Erreichen des fünften Schwellwertes f5 wird dann zusätzlich elektrische Energie aus der Batterie 8 der ersten Gleichstromstellereinheit 2 über den bidirektionalen Gleichstromsteller 5 der ersten Gleichstromstellereinheit 2 und den Umrichter 1 in das elektrische Wechselspannungsnetz eingespeist. Dadurch wird die Frequenz fn oberhalb des fünften, dritten und ersten Schwellwertes f5, f3, f1 und damit nahe der Soll-Frequenz fs mit Vorteil stabilisiert. Die erste Gleichstromstellereinheit 2 hat damit bezüglich ihrer Batterie 8 eine Entladefunktion.

Bei Erreichen des zweiten Grenzwertes LZ2 des Ladezustandes der Batterie 8 der ersten Gleichstromstellereinheit 2 bis zum Erreichen des ersten Grenzwertes LZ1 des Ladezustandes der Batterie 8 der ersten Gleichstromstellereinheit 2 oder bei Erreichen des ersten Grenzwertes LZ1 des Ladezustandes der Batterie 9 der zweiten Gleichstromstellereinheit 3 bis zum Erreichen des zweiten Grenzwertes LZ2 des Ladezustandes der Batterie 9 der zweiten Gleichstromstellereinheit 3 und bei Erreichen des sechsten Schwellwertes f6 wird dann zusätzlich elektrische Energie aus dem elektrischen Wechselspannungsnetz über den Umrichter 1 und den bidirektionalen Gleichstromsteller 6 der zweiten Gleichstromstellereinheit 3 in die Batterie 9 der zweiten Gleichstromstellereinheit 3 eingespeist. Dadurch wird die Frequenz fn unterhalb des sechsten, vierten und zweiten Schwellwertes f6, f4, f2 und damit nahe der Soll-Frequenz fs mit Vorteil stabilisiert. Die zweite Gleichstromstellereinheit 3 hat damit bezüglich ihrer Batterie 9 eine Ladefunktion.

Allgemein ist es auch denkbar, die Entladefunktion und die Ladefunktion der einzelnen Gleichstromstellereinheiten 2, 3, 4 bezüglich ihrer zugehörigen Batterien 8, 9, 10 frei zuzuordnen.

Ferner wird der Gesamtladezustand aller Batterien 8, 9, 10 auf einen ersten Gesamtladezustandsgrenzwert GLZ1 hin überwacht. Es hat sich als vorteilhaft erwiesen, dass der erste Gesamtladezustandsgrenzwert GLZ1=50% bezüglich aller vollgeladenen (100%) Batterien 8, 9, 10 gewählt wird. Bei Unterschreiten des ersten Gesamtladezustandsgrenzwertes GLZ1 und bei einer Frequenz fn des elektrischen Wechselspannungsnetzes zwischen dem ersten Schwellwert f1 und dem zweiten Schwellwert f2 wird dann elektrische Energie aus dem elektrischen Wechselspannungsnetz über den Umrichter 1 und den bidirektionalen Gleichstromsteller 7 der dritten Gleichstromstellereinheit 4 in die Batterie 10 der dritten Gleichstromstellereinheit 4 eingespeist. Dies bedeutet, dass die Batterie 10 der dritten Gleichstromstellereinheit 4 nur dann geladen wird, wenn der erste Gesamtladezustandsgrenzwert GLZ1 unterschritten wird und zudem die Frequenz fn um die Soll-Frequenz fs und zwischen dem ersten Schwellwert f1 und dem zweiten Schwellwert f2 liegt. Einen schnell wechselnden Lade-Entlade-Zyklus Batterie 10 der dritten Gleichstromstellereinheit 4 kann dadurch vorteilhaft vermieden werden, da die Batterie 10 seltner wieder aufgeladen wird. Damit können starke Belastungen reduziert beziehungsweise gering gehalten werden, wodurch die Batteriekapazität länger erhalten bleibt und die Lebensdauer der Batterie 10 verlängert werden kann.

Darüber hinaus wird Gesamtladezustand aller Batterien 8, 9, 10 auf einen zweiten Gesamtladezustandsgrenzwert GLZ2 hin überwacht, wobei der zweite Gesamtladezustandsgrenzwert GLZ2 grösser als der erste Gesamtladezustandsgrenzwert GLZ1 ist. Es hat sich als vorteilhaft erwiesen, dass der zweite Gesamtladezustandsgrenzwert GLZ2=70% bezüglich aller vollgeladenen (100%) Batterien 8, 9, 10 gewählt wird. Es hat sich als vorteilhaft erwiesen, dass der erste Gesamtladezustandsgrenzwert GLZ1=50% bezüglich aller vollgeladenen (100%) Batterien 8, 9, 10 gewählt wird. Bei Überschreiten des zweiten Gesamtladezustandsgrenzwertes GLZ2 und bei einer Frequenz fn des elektrischen Wechselspannungsnetzes zwischen dem ersten Schwellwert f1 und dem zweiten Schwellwert f2 wird elektrische Energie aus der Batterie 10 der dritten Gleichstromstellereinheit 4 über den bidirektionalen Gleichstromsteller 7 der dritten Gleichstromstellereinheit 4 und den Umrichter 1 in das elektrische Wechselspannungsnetz eingespeist. Dadurch kann vorteilhaft überschüssige elektrische Energie des Batteriespeichersystems dem elektrischen Wechselspannungsnetz, beispielsweise dem Energiemarkt eines elektrischen Wechselspannungsverbundnetzes, zur Verfügung gestellt werden.

### Bezugszeichenliste

- 1: Umrichter
- 2: erste Gleichstromstellereinheit
- 3: zweite Gleichstromstellereinheit
- 4: dritte Gleichstromstellereinheit
- 5: bidirektionaler Gleichstromsteller der ersten Gleichstromstellereinheit
- 6: bidirektionaler Gleichstromsteller der zweiten Gleichstromstellereinheit
- 7: bidirektionaler Gleichstromsteller der dritten Gleichstromstellereinheit
- 8: Batterie der ersten Gleichstromstellereinheit
- 9: Batterie der zweiten Gleichstromstellereinheit
- 10: Batterie der dritten Gleichstromstellereinheit

## Patentansprüche

1. Batteriespeichersystem mit einem bidirektionalen Umrichter (1) zur Ankopplung an ein elektrisches Wechselspannungsnetz,
**dadurch gekennzeichnet, dass**
eine erste und eine zweite Gleichstromstellereinheit (2, 3) vorgesehen ist, wobei jede Gleichstromstellereinheit (2, 3) einen bidirektionalen Gleichstromsteller (5, 6) und eine mit dem jeweiligen Eingang des zugehörigen bidirektionalen Gleichstromstellers (5, 6) verbundene Batterie (8, 9) aufweist,
dass die Ausgänge der bidirektionalen Gleichstromsteller (5, 6) mit der Gleichspannungsseite des Umrichters (1) verbunden sind, und
dass die Ausgänge der bidirektionalen Gleichstromsteller (5, 6) parallel miteinander verbunden sind.

2. Batteriespeichersystem nach Anspruch 1, **dadurch gekennzeichnet, dass** eine dritte Gleichstromstellereinheit (4) vorgesehen ist, wobei die dritte Gleichstromstellereinheit (4) einen bidirektionalen Gleichstromsteller (7) und eine mit dem Eingang des dritten bidirektionalen Gleichstromstellers (7) verbundene zugehörige Batterie (10) aufweist,
dass der Ausgang des dritten bidirektionalen Gleichstromstellers (7) mit der Gleichspannungsseite des Umrichters (1) verbunden ist, und
dass die Ausgänge der bidirektionalen Gleichstromsteller (5, 6, 7) parallel miteinander verbunden sind.

3. Verfahren zum Betrieb eines Batteriespeichersystem, welches Batteriespeichersystem einen bidirektionalen Umrichter (1) zur Ankopplung an ein elektrisches Wechselspannungsnetz aufweist,
bei dem die Frequenz (fn) des elektrischen Wechselspannungsnetzes überwacht wird,
**dadurch gekennzeichnet, dass**
eine erste und eine zweite Gleichstromstellereinheit (2, 3) vorgesehen ist, wobei jede Gleichstromstellereinheit (2, 3) einen bidirektionalen Gleichstromsteller (5, 6) und eine mit dem jeweiligen Eingang des zugehörigen bidirektionalen Gleichstromstellers (5, 6) verbundene Batterie (8, 9) aufweist,
dass die Ausgänge der bidirektionalen Gleichstromsteller (5, 6) mit der Gleichspannungsseite des Umrichters (1) verbunden sind,
dass die Ausgänge der bidirektionalen Gleichstromsteller (5, 6) parallel miteinander verbunden sind,
dass die Frequenz (fn) des elektrischen Wechselspannungsnetzes auf einen ersten Schwellwert (f1) und auf einen zweiten Schwellwert (f2) hin überwacht wird, wobei der zweite Schwellwert (f2) grösser als der erste Schwellwert (f1) ist,
dass der Ladezustand der Batterie (8) der ersten Gleichstromstellereinheit (2) und der Ladezustand der Batterie (9) der zweiten Gleichstromstellereinheit (3) auf einen ersten Grenzwert (LZ1) und auf einen zweiten Grenzwert (LZ2) hin überwacht wird, wobei der erste Grenzwert (LZ1) grösser als der zweite Grenzwert (LZ2) ist,
dass bei Erreichen des ersten Grenzwertes (LZ1) des Ladezustandes der Batterie (8) der ersten Gleichstromstellereinheit (2) bis zum Erreichen des zweiten Grenzwertes (LZ2) des Ladezustandes der Batterie (8) der ersten Gleichstromstellereinheit (2) oder bei Erreichen des zweiten Grenzwertes (LZ2) des Ladezustandes der Batterie (9) der zweiten Gleichstromstellereinheit (3) bis zum Erreichen des ersten Grenzwertes (LZ1) des Ladezustandes der Batterie (9) der zweiten Gleichstromstellereinheit (3) und bei Erreichen des ersten Schwellwertes (f1) elektrische Energie aus der Batterie (8) der ersten Gleichstromstellereinheit (2) über den bidirektionalen Gleichstromsteller (5) der ersten Gleichstromstellereinheit (2) und den Umrichter (1) in das elektrische Wechselspannungsnetz eingespeist wird, und
dass bei Erreichen des ersten Grenzwertes (LZ1) des Ladezustandes der Batterie (8) der ersten Gleichstromstellereinheit (2) bis zum Erreichen des zweiten Grenzwertes (LZ2) des Ladezustandes der Batterie (8) der ersten Gleichstromstellereinheit (2) oder bei Erreichen des zweiten Grenzwertes (LZ2) des Ladezustandes der Batterie (9) der zweiten Gleichstromstellereinheit (3) bis zum Erreichen des ersten Grenzwertes (LZ1)
des Ladezustandes der Batterie (9) der zweiten Gleichstromstellereinheit (3) und bei Erreichen des zweiten Schwellwertes (f2) elektrische Energie aus dem elektrischen Wechselspannungsnetz über den Umrichter (1) und den bidirektionalen Gleichstromsteller (6) der zweiten Gleichstromstellereinheit (3) in die Batterie (9) der zweiten Gleichstromstellereinheit (3) eingespeist wird.

4. Verfahren nach Anspruch 3, **dadurch gekennzeichnet, dass** eine dritte Gleichstromstellereinheit (4) vorgesehen ist, wobei die dritte Gleichstromstellereinheit (4) einen bidirektionalen Gleichstromsteller (7) und eine mit dem Eingang des dritten bidirektionalen Gleichstromstellers (7) verbundene zugehörige Batterie (10) aufweist,
dass der Ausgang des dritten bidirektionalen Gleichstromstellers (7) mit der Gleichspannungsseite des Umrichters (1) verbunden ist,
dass die Ausgänge der bidirektionalen Gleichstromsteller (5, 6, 7) parallel miteinander verbunden sind,
dass die Frequenz (fn) des elektrischen Wechselspannungsnetzes auf einen dritten Schwellwert (f3) hin überwacht wird, wobei der dritte Schwellwert (f3) kleiner als der erste Schwellwert (f1) ist,
dass bei Erreichen des ersten Grenzwertes (LZ1) des Ladezustandes der Batterie (8) der ersten Gleichstromstellereinheit (2) bis zum Erreichen des zweiten Grenzwertes (LZ2) des Ladezustandes der Batterie (8) der ersten Gleichstromstellereinheit (2) oder bei Erreichen des zweiten Grenzwertes (LZ2) des Ladezustandes der Batterie (9) der zweiten Gleichstromstellereinheit (3) bis zum Erreichen des ersten Grenzwertes (LZ1) des Ladezustandes der Batterie (9) der zweiten Gleichstromstellereinheit (3) und bei Erreichen des dritten Schwellwertes (f3) zusätzlich elektrische Energie aus der Batterie (10) der dritten Gleichstromstellereinheit (4) über den bidirektionalen Gleichstromsteller (7) der dritten Gleichstromstellereinheit (4) und den Umrichter (1) in das elektrische Wechselspannungsnetz eingespeist wird.

5. Verfahren nach Anspruch 4, **dadurch gekennzeichnet, dass** die Frequenz (fn) des elektrischen Wechselspannungsnetzes auf einen vierten Schwellwert (f4) hin überwacht wird, wobei der vierte Schwellwert (f4) grösser als der zweite Schwellwert (f2) ist,
dass bei Erreichen des ersten Grenzwertes (LZ1) des Ladezustandes der Batterie (8) der ersten Gleichstromstellereinheit (2) bis zum Erreichen des zweiten Grenzwertes (LZ2) des Ladezustandes der Batterie (8) der ersten Gleichstromstellereinheit (2) oder bei Erreichen des zweiten Grenzwertes (LZ2) des Ladezustandes der Batterie (9) der zweiten Gleichstromstellereinheit (3) bis zum Erreichen des ersten Grenzwertes (LZ1) des Ladezustandes der Batterie (9) der zweiten Gleichstromstellereinheit (3) und bei Erreichen des vierten Schwellwertes (f4) zusätzlich elektrische Energie aus dem elektrischen Wechselspannungsnetz über den Umrichter (1) und den bidirektionalen Gleichstromsteller (7) der dritten Gleichstromstellereinheit (4) in die Batterie (10) der dritten Gleichstromstellereinheit (4) eingespeist wird.

6. Verfahren nach Anspruch 5, **dadurch gekennzeichnet, dass** die Frequenz (fn) des elektrischen Wechselspannungsnetzes auf einen fünften Schwellwert (f5) hin überwacht wird, wobei der fünfte Schwellwert (f5) kleiner als der dritte Schwellwert (f3) ist,
dass bei Erreichen des ersten Grenzwertes (LZ1) des Ladezustandes der Batterie (8) der ersten Gleichstromstellereinheit (2) bis zum Erreichen des zweiten Grenzwertes (LZ2) des Ladezustandes der Batterie (8) der ersten Gleichstromstellereinheit (2) oder bei Erreichen des zweiten Grenzwertes (LZ2) des Ladezustandes der Batterie (9) der zweiten Gleichstromstellereinheit (3) bis zum Erreichen des ersten Grenzwertes (LZ1) des Ladezustandes der Batterie (9) der zweiten Gleichstromstellereinheit (3) und bei Erreichen des fünften Schwellwertes (f5) zusätzlich elektrische Energie aus der Batterie (9) der zweiten Gleichstromstellereinheit (3) über den bidirektionalen Gleichstromsteller (6) der zweiten Gleichstromstellereinheit (3) und den Umrichter (1) in das elektrische Wechselspannungsnetz eingespeist wird.

7. Verfahren nach Anspruch 6, **dadurch gekennzeichnet, dass** die Frequenz (fn) des elektrischen Wechselspannungsnetzes auf einen sechsten Schwellwert (f6) hin überwacht wird, wobei der sechste Schwellwert (f6) grösser als der vierte Schwellwert (f4) ist,
dass bei Erreichen des ersten Grenzwertes (LZ1) des Ladezustandes der Batterie (8) der ersten Gleichstromstellereinheit (2) bis zum Erreichen des zweiten Grenzwertes (LZ2) des Ladezustandes der Batterie (8) der ersten Gleichstromstellereinheit (2) oder bei Erreichen des zweiten Grenzwertes (LZ2) des Ladezustandes der Batterie (9) der zweiten Gleichstromstellereinheit (3) bis zum Erreichen des ersten Grenzwertes (LZ1) des Ladezustandes der Batterie (9) der zweiten Gleichstromstellereinheit (3) und bei Erreichen des sechsten Schwellwertes (f6) zusätzlich elektrische Energie aus dem elektrischen Wechselspannungsnetz über den Umrichter (1) und den bidirektionalen Gleichstromsteller (5) der ersten Gleichstromstellereinheit (2) in die Batterie (8) der ersten Gleichstromstellereinheit (2) eingespeist wird.

8. Verfahren nach Anspruch 3, **dadurch gekennzeichnet, dass** bei Erreichen des zweiten Grenzwertes (LZ2) des Ladezustandes der Batterie (8) der ersten Gleichstromstellereinheit (2) bis zum Erreichen des ersten Grenzwertes (LZ1) des Ladezustandes der Batterie (8) der ersten Gleichstromstellereinheit (2) oder bei Erreichen des ersten Grenzwertes (LZ1) des Ladezustandes der Batterie (9) der zweiten Gleichstromstellereinheit (3) bis zum Erreichen des zweiten Grenzwertes (LZ2) des Ladezustandes der Batterie (9) der zweiten Gleichstromstellereinheit (3) und bei Erreichen des ersten Schwellwertes (f1) elektrische Energie aus der Batterie (9) der zweiten Gleichstromstellereinheit (3) über den bidirektionalen Gleichstromsteller (6) der zweiten Gleichstromstellereinheit (3) und den Umrichter (1) in das elektrische Wechselspannungsnetz eingespeist wird, und
dass bei Erreichen des zweiten Grenzwertes (LZ2) des Ladezustandes der Batterie (8) der ersten Gleichstromstellereinheit (2) bis zum Erreichen des ersten Grenzwertes (LZ1) des Ladezustandes der Batterie (8) der ersten Gleichstromstellereinheit (2) oder bei Erreichen des ersten Grenzwertes (LZ1) des Ladezustandes der Batterie (9) der zweiten Gleichstromstellereinheit (3) bis zum Erreichen des zweiten Grenzwertes (LZ2) des Ladezustandes der Batterie (9) der zweiten Gleichstromstellereinheit (3) und bei Erreichen des zweiten Schwellwertes (f2) elektrische Energie aus dem elektrischen Wechselspannungsnetz über den Umrichter (1) und den bidirektionalen Gleichstromsteller (5) der ersten Gleichstromstellereinheit (2) in die Batterie (8) der ersten Gleichstromstellereinheit (2) eingespeist wird.

9. Verfahren nach Anspruch 8, **dadurch gekennzeichnet, dass** eine dritte Gleichstromstellereinheit (4) vorgesehen ist, wobei die dritte Gleichstromstellereinheit (4) einen bidirektionalen Gleichstromsteller (7) und eine mit dem Eingang des dritten bidirektionalen Gleichstromstellers (7) verbundene zugehörige Batterie (10) aufweist,
dass der Ausgang des dritten bidirektionalen Gleichstromstellers (7) mit der Gleichspannungsseite des Umrichters (1) verbunden ist,
dass die Ausgänge der bidirektionalen Gleichstromsteller (5, 6, 7) parallel miteinander verbunden sind,
dass die Frequenz (fn) des elektrischen Wechselspannungsnetzes auf einen dritten Schwellwert (f3) hin überwacht wird, wobei der dritte Schwellwert (f3) kleiner als der erste Schwellwert (f1) ist,
dass bei Erreichen des zweiten Grenzwertes (LZ2) des Ladezustandes der Batterie (8) der ersten Gleichstromstellereinheit (2) bis zum Erreichen des ersten Grenzwertes (LZ1) des Ladezustandes der Batterie (8) der ersten Gleichstromstellereinheit (2) oder bei Erreichen des ersten Grenzwertes (LZ1) des Ladezustandes der Batterie (9) der zweiten Gleichstromstellereinheit (3) bis zum Erreichen des zweiten Grenzwertes (LZ2) des Ladezustandes der Batterie (9) der zweiten Gleichstromstellereinheit (3) und bei Erreichen des dritten Schwellwertes (f3) zusätzlich elektrische Energie aus der Batterie (10) der dritten Gleichstromstellereinheit (4) über den bidirektionalen Gleichstromsteller (7) der dritten Gleichstromstellereinheit (4) und den Umrichter (1) in das elektrische Wechselspannungsnetz eingespeist wird.

10. Verfahren nach Anspruch 9, **dadurch gekennzeichnet, dass** die Frequenz (fn) des elektrischen Wechselspannungsnetzes auf einen vierten Schwellwert (f4) hin überwacht wird, wobei der vierte Schwellwert (f4) grösser als der zweite Schwellwert (f2) ist,
dass bei Erreichen des zweiten Grenzwertes (LZ2) des Ladezustandes der Batterie (8) der ersten Gleichstromstellereinheit (2) bis zum Erreichen des ersten Grenzwertes (LZ1) des Ladezustandes der Batterie (8) der ersten Gleichstromstellereinheit (2) oder bei Erreichen des ersten Grenzwertes (LZ1) des Ladezustandes der Batterie (9) der zweiten Gleichstromstellereinheit (3) bis zum Erreichen des zweiten Grenzwertes (LZ2) des Ladezustandes der Batterie (9) der zweiten Gleichstromstellereinheit (3) und bei Erreichen des vierten Schwellwertes (f4) zusätzlich elektrische Energie aus dem elektrischen Wechselspannungsnetz über den Umrichter (1) und den bidirektionalen Gleichstromsteller (7) der dritten Gleichstromstellereinheit (4) in die Batterie (10) der dritten Gleichstromstellereinheit (4) eingespeist wird.

11. Verfahren nach Anspruch 10, **dadurch gekennzeichnet, dass** die Frequenz (fn) des elektrischen Wechselspannungsnetzes auf einen fünften Schwellwert (f5) hin überwacht wird, wobei der fünfte Schwellwert (f5) kleiner als der dritte Schwellwert (f3) ist,
dass bei Erreichen des zweiten Grenzwertes (LZ2) des Ladezustandes der Batterie (8) der ersten Gleichstromstellereinheit (2) bis zum Erreichen des ersten Grenzwertes (LZ1) des Ladezustandes der Batterie (8) der ersten Gleichstromstellereinheit (2) oder bei Erreichen des ersten Grenzwertes (LZ1) des Ladezustandes der Batterie (9) der zweiten Gleichstromstellereinheit (3) bis zum Erreichen des zweiten Grenzwertes (LZ2) des Ladezustandes der Batterie (9) der zweiten Gleichstromstellereinheit (3) und bei Erreichen des fünften Schwellwertes (f5) zusätzlich elektrische Energie aus der Batterie (8) der ersten Gleichstromstellereinheit (2) über den bidirektionalen Gleichstromsteller (5) der ersten Gleichstromstellereinheit (2) und den Umrichter (1) in das elektrische Wechselspannungsnetz eingespeist wird.

12. Verfahren nach Anspruch 11, **dadurch gekennzeichnet, dass** die Frequenz (fn) des elektrischen Wechselspannungsnetzes auf einen sechsten Schwellwert (f6) hin überwacht wird, wobei der sechste Schwellwert (f6) grösser als der vierte Schwellwert (f4) ist,
dass bei Erreichen des zweiten Grenzwertes (LZ2) des Ladezustandes der Batterie (8) der ersten Gleichstromstellereinheit (2) bis zum Erreichen des ersten Grenzwertes (LZ1) des Ladezustandes der Batterie (8) der ersten Gleichstromstellereinheit (2) oder bei Erreichen des ersten Grenzwertes (LZ1) des Ladezustandes der Batterie (9) der zweiten Gleichstromstellereinheit (3) bis zum Erreichen des zweiten Grenzwertes (LZ2) des Ladezustandes der Batterie (9) der zweiten Gleichstromstellereinheit (3) und bei Erreichen des sechsten Schwellwertes (f6) zusätzlich elektrische Energie aus dem elektrischen Wechselspannungsnetz über den Umrichter (1) und den bidirektionalen Gleichstromsteller (6) der zweiten Gleichstromstellereinheit (3) in die Batterie (9) der zweiten Gleichstromstellereinheit (3) eingespeist wird.

13. Verfahren nach einem der Ansprüche 4 bis 7 oder 9 bis 12, **dadurch gekennzeichnet, dass** der Gesamtladezustand aller Batterien (8, 9, 10) auf einen ersten Gesamtladezustandsgrenzwert (GLZ1) hin überwacht wird,
dass bei Unterschreiten des ersten Gesamtladezustandsgrenzwertes (GLZ1) und bei einer Frequenz (fn) des elektrischen Wechselspannungsnetzes zwischen dem ersten Schwellwert (f1) und dem zweiten Schwellwert (f2) elektrische Energie aus dem elektrischen Wechselspannungsnetz über den Umrichter (1) und den bidirektionalen Gleichstromsteller (7) der dritten Gleichstromstellereinheit (4) in die Batterie (10) der dritten Gleichstromstellereinheit (4) eingespeist wird.

14. Verfahren nach Anspruch 13, **dadurch gekennzeichnet, dass** der Gesamtladezustand aller Batterien (8, 9, 10) auf einen zweiten Gesamtladezustandsgrenzwert (GLZ2) hin überwacht wird, wobei der zweite Gesamtladezustandsgrenzwert (GLZ2) grösser als der erste Gesamtladezustandsgrenzwert (GLZ1) ist,
dass bei Überschreiten des zweiten Gesamtladezustandsgrenzwertes (GLZ2) und bei einer Frequenz (fn) des elektrischen Wechselspannungsnetzes zwischen dem ersten Schwellwert (f1) und dem zweiten Schwellwert (f2) elektrische Energie aus der Batterie (10) der dritten Gleichstromstellereinheit (4) über den bidirektionalen Gleichstromsteller (7) der dritten Gleichstromstellereinheit (4) und den Umrichter (1) in das elektrische Wechselspannungsnetz eingespeist wird.
